# EUROPEAN PATENT APPLICATION

(11) **EP 3 531 648 A1**
(43) Date of publication of application: **28.08.2019**
(21) Application number: 17861397.2
(22) Date of filing: 19.10.2017
(51) Int. Cl.: H04L 29/06

(54) **MEDIA STREAM TRANSMITTING AND RECEIVING METHOD AND DEVICE, SYSTEM AND VIDEO RELAY**

(30) Priority: 19.10.2016 CN 201610912019
(71) Applicant: ZTE Corporation, Shenzhen, Guangdong 518057 (CN)
(72) Inventor: GAO, Yang, Shenzhen Guangdong 518057 (CN)
(74) Representative: Aipex B.V.
(86) International application number: PCT/CN2017/106854
(87) International publication number: WO 2018/072729

(57) **Abstract**

Provided in the present disclosure are a media stream transmission method and apparatus, a media stream reception method and apparatus, a system and a video relay. The method includes: receiving media streams transmitted by a transmitting end, where the media streams are media streams encoded by the transmitting end according to a class requirement received by the transmitting end; and transmitting, according to a pre-established corresponding relationship between a class of a media stream and a receiving end, to the receiving end a media stream, among the received media streams, at a class corresponding to the receiving end. Through the present disclosure, the problem, in the related art, of poor user experience due to the totally same class of the video stream viewed by all users in a multi-stream architecture of an IP multimedia subsystem (IMS) can be solved. Thus, the effect of improving user experience is achieved.

## Description

### TECHNICAL FIELD

The present disclosure relates to the technical field of communications and, in particular, to a media stream transmission method and apparatus, a media stream reception method and apparatus, a system and a video relay.

### BACKGROUND

A multi-stream architecture based on the Internet Protocol (IP) multimedia subsystem (IMS) has been highly recognized by many mainstream operators. However, currently operators also propose some key enhancement requirements on this architecture. One of the most key enhancement requirements is on classification of media through a relay server. Specific description is as follows.

The current IMS multi-stream architecture allows to dynamically adjust the class (such as resolution class, bit rate class, etc.) of a single user's uplink video stream according to the number of members in a multi-party video scenario. In this way, the user's uplink video stream is always provided according to the actual display requirements, which can effectively reduce the uplink bandwidth occupation of a single user. However, a limitation still exists in such a way, that is, the class of a specific video stream that all users can watch is exactly the same. Colloquially speaking, if a specific video stream has a high resolution, everyone will watch the high-resolution video stream; and if a specific video stream has a low resolution, everyone will watch the low-resolution video stream.

Technologies are developing and user requirements are improving, for example some users using large-screen devices (such as pads or set-top boxes + flat-panel TVs) have higher requirements on the definition of certain streams than mobile terminal users, so the transmitting end of these certain streams are expected to deliver these video streams at a high class. For another example, different users have different requirements. A user may pay more attention to another person in the conference, the definition of a stream for this person is required to be higher than that of other users, so it is hoped that the transmitting end of this stream can transmit this video stream at a high class.

In view of the above technical problem in the related art, no effective solution has yet been proposed.

### SUMMARY

A media stream transmission method and apparatus, a media stream reception method and apparatus, a system and a video relay are provided in the embodiments of the present disclosure, to at least solve the problem, in the related art, of poor user experience due to the totally same class of the video stream viewed by all users in a multi-stream architecture of an IMS.

An embodiment of the present disclosure provides a media stream transmission method. The method includes: receiving media streams transmitted by a transmitting end, where the media streams are media streams encoded by the transmitting end according to a class requirement received by the transmitting end; and transmitting, according to a pre-established corresponding relationship between a class of a media stream and a receiving end, to the receiving end a media stream, among the received media streams, at a class corresponding to the receiving end.

In the embodiment of the present disclosure, the receiving end includes a first terminal that supports receiving and decoding a classified media stream.

In the embodiment of the present disclosure, in a case of the receiving end including a plurality of the first terminals, the step of transmitting, according to the pre-established corresponding relationship between the class of the media stream and the receiving end, to the receiving end the media stream, among the received media streams, at the class corresponding to the receiving end includes: making, according to the corresponding relationship, multiple copies of a media stream, among the received media streams, at a same class corresponding to a plurality of the first terminals, and respectively transmitting each of the multiple copies of the media stream at the same class and a respective media stream at another class corresponding to each of the plurality of the first terminals to the each of the plurality of the first terminals.

In the embodiment of the present disclosure, in a case of the receiving end further including an advanced video coding (AVC) terminal, the step of transmitting, according to the pre-established corresponding relationship between the class of the media stream and the receiving end, to the receiving end the media stream, among the received media streams, at the class corresponding to the receiving end further includes: copying the received media streams; modifying a network abstraction layer (NAL) header in a lowest-class media stream among the received media streams to a network abstraction layer header in an advanced video coding (AVC) format; and transmitting, according to the AVC format, the modified lowest-class media stream to the AVC terminal.

In the embodiment of the present disclosure, in a case of the coding being scaled video coding (SVC), a network abstraction layer header in each of the received media streams includes a class identifier of each class of the media stream.

In the embodiment of the present disclosure, the step of transmitting, according to the pre-established corresponding relationship between the class of the media stream and the receiving end, to the receiving end the media stream, among the received media streams, at the class corresponding to the receiving end includes: transmitting, according to the corresponding relationship and the class identifier, to the receiving end the media stream, among the received media streams, at the class corresponding to the receiving end.

In the embodiment of the present disclosure, before receiving the media streams transmitted by the transmitting end, the method further includes: receiving first request information transmitted by the receiving end for requesting adjustment of a class of a media stream, where the first request information carries a class requirement of the receiving end on the class of the media stream; establishing the corresponding relationship; and transmitting to the transmitting end second request information for making a request to adjust the media stream to be in a manner of classification, where the second request information also carries the class requirement of the receiving end on the class of the media stream.

In the embodiment of the present disclosure, the step of receiving the first request information transmitted by the receiving end for requesting adjustment of the class of the media stream includes one of: directly receiving the first request information transmitted by the receiving end; and receiving, through a web server and an application server, the first request information transmitted by the receiving end.

In the embodiment of the present disclosure, after transmitting to the transmitting end the second request information for making the request to adjust the media stream to be in the manner of classification, the method further includes one of that: the transmitting end rejects the second request information; and that the transmitting end accepts the second request information.

Another embodiment of the present disclosure provides a media stream transmission system. The system includes: a transmitting end, a video relay and a receiving end. The transmitting end encodes a media stream according to a class requirement received by the transmitting end, and transmits encoded media streams to the video relay. The video relay receives the encoded media streams, and transmits according to a pre-established corresponding relationship between a class of the media stream and the receiving end, to the receiving end a media stream, among the received and encoded media streams, at a class corresponding to the receiving end.

In the embodiment of the present disclosure, the receiving end includes a first terminal that supports receiving and decoding a classified media stream.

In the embodiment of the present disclosure, the video relay is further configured to make, according to the corresponding relationship, multiple copies of a media stream, among the received media streams, at a same class corresponding to a plurality of the first terminals, and respectively transmit each of the multiple copies of the media stream at the same class and a respective media stream at another class corresponding to each of the plurality of the first terminals to the each of the plurality of the first terminals.

In the embodiment of the present disclosure, in a case of the receiving end further including an advanced video coding (AVC) terminal, the video relay is further configured to copy the received media streams, modify a network abstraction layer (NAL) unit header in a lowest-class media stream among the received media streams to a NAL unit header in an AVC format, and transmit, according to the AVC format, the modified lowest-class media stream to the AVC terminal.

In the embodiment of the present disclosure, in a case of the coding being scaled video coding (SVC), a network abstraction layer header in each of the received media streams includes a class identifier of each class of the media stream.

In the embodiment of the present disclosure, the video relay is further configured to transmit, according to the corresponding relationship and the class identifier, to the receiving end the media stream, among the received media streams, at the class corresponding to the receiving end.

In the embodiment of the present disclosure, the receiving end is further configured to: transmit to the video relay first request information for requesting adjustment of a class of the media stream, where the first request information carries a class requirement of the receiving end on the class of the media stream, and the video relay receives the first request information and then establishes the corresponding relationship; and transmit to the transmitting end second request information for making a request to adjust the media stream to be in a manner of classification, where the second request information also carries the class requirement of the receiving end on the class of the media stream.

In the embodiment of the present disclosure, the system further includes a web server. The web server is configured to provide a web interface to the receiving end, and the web interface is configured to submit class requirement selected by a user to the web server.

In the embodiment of the present disclosure, the system further includes an application server, which is configured to transmit the class requirement submitted to the web server to the video relay.

In the embodiment of the present disclosure, the transmitting end is further configured to perform at least one of following operations: rejecting the second request information; and accepting the second request information.

Another embodiment of the present disclosure provides a media stream transmission apparatus. The apparatus includes: a reception module, which is configured to receive media streams transmitted by a transmitting end, where the media streams are media streams encoded by the transmitting end according to a class requirement received by the transmitting end; and a transmission module, which is configured to transmit, according to a pre-established corresponding relationship between a class of a media stream and a receiving end, to the receiving end a media stream, among the received media streams, at a class corresponding to the receiving end.

In the embodiment of the present disclosure, the receiving end includes a first terminal that supports receiving and decoding a classified media stream.

In the embodiment of the present disclosure, in a case of the receiving end including a plurality of the first terminals, the transmission module further includes: a copy unit, which is configured to make, according to the corresponding relationship, multiple copies of a media stream, among the received media streams, at a same class corresponding to a plurality of the first terminals; and a transmission unit, which is configured to respectively transmit each of the multiple copies of the media stream at the same class and a respective media stream at another class corresponding to each of the plurality of the first terminals to the each of the plurality of the first terminals.

In the embodiment of the present disclosure, in a case of the receiving end further including an advanced video coding (AVC) terminal, the copy unit is further configured to copy the received media streams; the transmission module further includes a modification unit, which is configured to modify a network abstraction layer (NAL) unit header in a lowest-class media stream among the received media streams to a NAL unit header in an AVC format; and the transmission unit is further configured to transmit, according to the AVC format, the modified lowest-class media stream to the AVC terminal.

In the embodiment of the present disclosure, in a case of the coding being scaled video coding (SVC), a network abstraction layer header in each of the received media streams includes a class identifier of each class of the media stream.

In the embodiment of the present disclosure, the transmission module is further configured to transmit, according to the corresponding relationship and the class identifier, to the receiving end the media stream, among the received media streams, at the class corresponding to the receiving end.

In the embodiment of the present disclosure, the reception module is further configured to receive first request information transmitted by the receiving end for requesting adjustment of a class of the media stream, where the first request information carries a class requirement of the receiving end on the class of the media stream. The apparatus further includes: an establishment module, which is configured to establish the corresponding relationship. The transmission module is further configured to transmit to the transmitting end second request information for making a request to adjust the media stream to be in a manner of classification, where the second request information also carries the class requirement of the receiving end on the class of the media stream.

In the embodiment of the present disclosure, the reception module is further configured to perform one of following operations: directly receiving the first request information transmitted by the receiving end; and receiving, through a web server and an application server, the first request information transmitted by the receiving end.

Another embodiment of the present disclosure provides a video relay. The video relay includes the media stream transmission apparatus described above.

Another embodiment of the present disclosure provides a media stream transmission method. The method includes: receiving a class requirement of a receiving end on a class of a media stream through a video relay; coding, according to the class requirement, the media stream; and transmitting encoded media streams to the video relay.

In the embodiment of the present disclosure, the step of receiving the class requirement of the receiving end on the class of the media stream through the video relay includes: receiving request information, transmitted by the video relay, for making a request to adjust the media stream to be in a manner of classification, where the request information carries the class requirement of the receiving end on the class of the media stream.

In the embodiment of the present disclosure, after receiving the request information, transmitted by the video relay, for making the request to adjust the media stream to be in the manner of classification, the method further includes one of: rejecting the request information; and accepting the request information.

In the embodiment of the present disclosure, the step of coding, according to the class requirement, the media stream includes: performing, according to the class requirement, scaled video coding on the media stream, where a network abstraction layer header in each of media streams after the scaled video coding is performed includes a class identifier of each class of the media stream.

Another embodiment of the present disclosure provides a media stream transmission apparatus.

The apparatus includes: a reception module, which is configured to receive a class requirement of a receiving end on a class of a media stream through a video relay; a coding module, which is configured to encode, according to the class requirement, the media stream; and a transmission module, which is configured to transmit encoded media streams to the video relay.

In the embodiment of the present disclosure, the reception module is further configured to receive request information, transmitted by the video relay, for making a request to adjust the media stream to be in a manner of classification, where the request information carries a class requirement of the receiving end on a class of the media stream.

In the embodiment of the present disclosure, the coding module is further configured to perform, according to the class requirement, SVC on the media stream, where a NAL unit header in each of media streams after the SVC is performed includes a class identifier of each class of the media stream.

Another embodiment of the present disclosure provides a media stream reception method. The method includes: transmitting a class requirement to a transmitting end through a video relay, where the class requirement is used by the transmitting end for encoding a media stream; and receiving a media stream at a class corresponding to a receiving end through the video relay.

In the embodiment of the present disclosure, the step of transmitting the class requirement to the transmitting end through the video relay includes: transmitting, through the video relay, to the transmitting end request information for making a request to adjust the media stream to be in a manner of classification, where the request information carries the class requirement.

In the embodiment of the present disclosure, the coding is scaled video coding (SVC).

In the embodiment of the present disclosure, before transmitting the class requirement to the transmitting end through the video relay, the method further includes: requesting a web interface from a web server, where the web interface is configured to submit class requirement selected by a user to the web server.

Another embodiment of the present disclosure provides a media stream reception apparatus. The apparatus includes: a transmission module, which is configured to transmit a class requirement to a transmitting end through a video relay, where the class requirement is used by the transmitting end for encoding a media stream; and a reception module, which is configured to receive a media stream at a class corresponding to a receiving end through the video relay.

In the embodiment of the present disclosure, the transmission module is further configured to transmit, through the video relay, to the transmitting end request information for making a request to adjust the media stream to be in a manner of classification, where the request information carries the class requirement.

In the embodiment of the present disclosure, the coding is scaled video coding (SVC).

In the embodiment of the present disclosure, the apparatus further includes: a request module, which is configured to request a web interface from a web server, where the web interface is configured to submit class requirement selected by a user to the web server.

Another embodiment of the present disclosure further provides a storage medium. The storage medium is configured to store program codes for executing following steps: receiving media streams transmitted by a transmitting end, where the media streams are media streams encoded by the transmitting end according to a class requirement received by the transmitting end; and transmitting, according to a pre-established corresponding relationship between a class of a media stream and a receiving end, to the receiving end a media stream, among the received media streams, at a class corresponding to the receiving end.

Another embodiment of the present disclosure further provides a storage medium. The storage medium includes stored programs which, when executed, execute the method of any one of the embodiments described above.

Another embodiment of the present disclosure further provides a processor. The processor is configured to execute programs which, when executed, execute the method of any one of the embodiments described above.

Through the present disclosure, the media stream is encoded according to the class requirement of the receiving end, so that the media stream, among the received streams, at the class corresponding to the receiving end may be transmitted to the receiving end according to the corresponding relationship between the class of the media stream and the receiving end. The classes of the media stream received by different receiving ends may be different, so that the classes of the video stream viewed by different users are different. Therefore, the problem, in the related art, of poor user experience due to the totally same class of the video stream viewed by all users in a multi-stream architecture of an IMS can be solved. The user experience is improved.

### BRIEF DESCRIPTION OF DRAWINGS

The drawings described herein are used to provide a further understanding of the present disclosure and form a part of the present application. The exemplary embodiments and descriptions thereof in the present disclosure are used to explain the present disclosure and not to limit the present disclosure in any improper way. In the drawings:
FIG. 1 is a structural block diagram illustrating a relay architecture of streaming media classification according to a preferred embodiment of the present disclosure;
FIG. 2 is a structural block diagram illustrating a web-controlled relay architecture of media stream classification according to a preferred embodiment of the present disclosure;
FIG. 3 is a flowchart of a media stream transmission method according to the embodiment of the present disclosure;
FIG. 4 is a flowchart of a media stream transmission method according to the embodiment of the present disclosure;
FIG. 5 is a flowchart of a media stream reception method according to the embodiment of the present disclosure;
FIG. 6 is a flowchart 1 illustrating a relay processing process of media stream classification according to a preferred embodiment of the present disclosure;
FIG. 7 is a flowchart 2 illustrating a relay processing process of media stream classification according to a preferred embodiment of the present disclosure;
FIG. 8 is a flowchart 1 illustrating a relay processing process of media stream classification based on a scaled video coding (SVC) technology according to a preferred embodiment of the present disclosure;
FIG. 9 is a flowchart 2 illustrating a relay processing process of media stream classification based on a SVC technology according to a preferred embodiment of the present disclosure;
FIG. 10 is a flowchart 1 illustrating a negotiation process of media stream classification according to a preferred embodiment of the present disclosure;
FIG. 11 is a flowchart illustrating a negotiation process of web-controlled media stream classification according to a preferred embodiment of the present disclosure;
FIG. 12 is a flowchart illustrating a process in which a video source does not support media stream classification according to a preferred embodiment of the present disclosure;
FIG. 13 is a flowchart illustrating a process in which a session border controller (SBC) performs media stream classification and transcoding according to a preferred embodiment of the present disclosure;
FIG. 14 is a structural block diagram 1 of a media stream transmission apparatus according to an embodiment of the present disclosure;
FIG. 15 is a structural block diagram 2 of a media stream transmission apparatus according to an embodiment of the present disclosure;
FIG. 16 is a structural block diagram of a media stream reception apparatus according to the embodiment of the present disclosure; and
FIG. 17 is a structural block diagram of a media stream transmission system according to an embodiment of the present disclosure.

### DETAILED DESCRIPTION

The present disclosure will be described hereinafter in detail with reference to the drawings in conjunction with the embodiments. It should be noted that if not in collision, the embodiments and features therein in the present application may be combined with each other.

It should be noted that the terms "first", "second" and the like in the description, claims and drawings of the present disclosure are used to distinguish between similar objects and are not necessarily used to describe a particular order or sequence.

### Embodiment 1

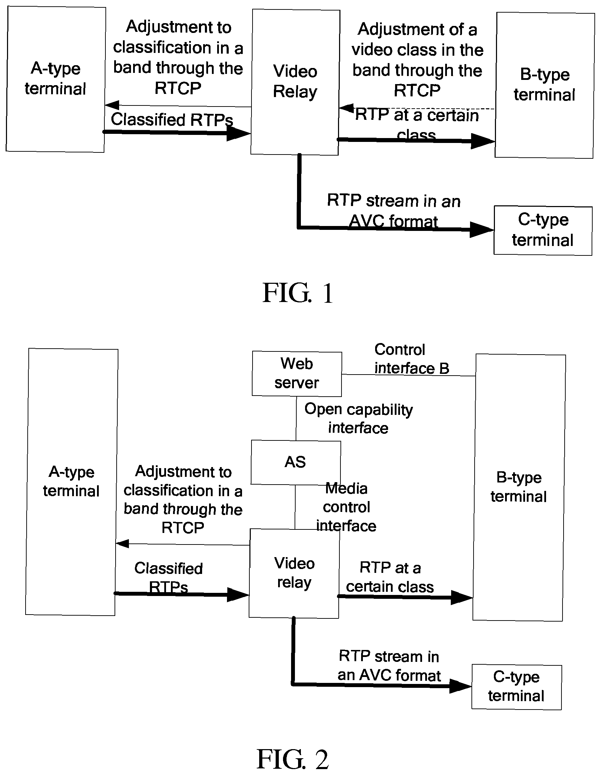

The embodiment of the present application may be executed on a network architecture shown in FIG. 1 or FIG. 2. As shown in FIG. 1 or 2, the network architecture includes: an A-type terminal, a video relay, a B-type terminal, and/or a C-type terminal. The A-type terminal interacts with the B-type terminal and/or the C-type terminal through the video relay, or the A-type terminal interacts with the B-type terminal and/or the C-type terminal through the video relay, a web server and an application server.

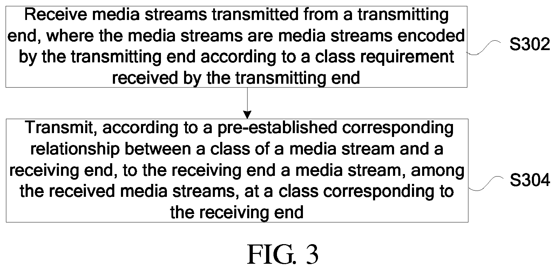

In the embodiment, a media stream transmission method executing on the network structure described above is provided. FIG. 3 is a flowchart of the media stream transmission method according to the embodiment of the present disclosure. As shown in FIG. 3, the process of the method includes steps described below.

In S302, media streams transmitted by a transmitting end are received. The media streams are media streams encoded by the transmitting end according to a class requirement received by the transmitting end.

In S304, a media stream, among the received media streams, at a class corresponding to the receiving end is transmitted to the receiving end according to a pre-established corresponding relationship between a class of a media stream and a receiving end.

Through the above steps, the media stream is encoded according to the class requirement of the receiving end, so that the media stream, among the received streams, at the class corresponding to the receiving end may be transmitted to the receiving end according to the corresponding relationship between the class of the media stream and the receiving end. The classes of the media stream received by different receiving ends may be different, so that the classes of the video stream viewed by different users are different. Therefore, the problem, in the related art, of poor user experience due to the totally same class of the video stream viewed by all users in a multi-stream architecture of an IMS can be solved. The user experience is improved.

It should be noted that the class described above may be the class of the resolution of the media stream or the class of the code rate of the media stream, but is not limited thereto. For example, in the case of the class of the resolution, the class may be divided into high definition, standard definition, smooth, etc., but is not limited thereto.

In an embodiment of the present disclosure, the receiving end described above may include a first terminal that supports receiving and decoding a classified media stream. The transmitting end described above may be a terminal that supports classification coding negotiation, and classification video coding and transmission. It should be noted that generally, the receiving end may not have the capability of the transmitting end, while the transmitting end may have the capability of the receiving end.

It should be noted that the above-mentioned coding of the media stream may be coding in an inter-class-dependent manner, for example class 1 is the lowest class, class 2 is a higher class, and a complete class 2 media stream includes two parts: a class 1 media stream and a class 2 media stream. Therefore, in the case of the class corresponding to the receiving end (the media stream class required by the receiving end is class 2), the above step S304 may be expressed as that: a media stream corresponding to class 1 and a media stream corresponding to class 2 (i.e., the complete class 2 media stream) are transmitted to the receiving end. However, the present disclosure is not limited to the above coding manner. For example, SVC coding may also be used.

In an embodiment of the present disclosure, in a case of the receiving end including a plurality of the first terminals, the above step S304 may be expressed as that: multiple copies of a media stream, among the received media streams, at a same class corresponding to a plurality of the first terminals are made according to the corresponding relationship, and each of the multiple copies of the media stream at the same class and a respective media stream at another class corresponding to each of the plurality of the first terminals are respectively transmitted to the each of the plurality of the first terminals.

An example is given. For example, two first terminal described above are included, namely, a terminal 1 and a terminal 2, the class requirement of the terminal 1 on the media stream class is class 2, and the class requirement of the terminal 2 on the media stream class is class 3. Then based on the above-mentioned coding in the inter-class-dependent manner, the classes corresponding to the terminal 1 are class 1 and class 2, the classes corresponding to the terminal 2 are class 1, class 2, and class 3, and the same classes corresponding to both the terminal 1 and the terminal 2 are class 1 and class 2. Then, the media stream corresponding to class 1 and the media stream corresponding to class 2 are respectively made into two copies. One copied media stream corresponding to class 1 and one copied media stream corresponding to class 2 are transmitted to the terminal 1. The other copied media stream corresponding to class 1, the other copied media stream corresponding to class 2, and a media stream corresponding to class 3 are transmitted to the terminal 2 together.

In an embodiment of the present disclosure, in a case of the receiving end further including an advanced video coding (AVC) terminal, the above step S304 may further include: copying the received media streams; modifying a network abstraction layer (NAL) unit header in a lowest-class media stream among the received media streams to a NAL unit header in an AVC format; and transmitting, according to the AVC format, the modified lowest-class media stream to the AVC terminal.

It should be noted that a data block part in the lowest-class media stream among the received media streams may be unchanged, and only the NAL unit header is modified, so that the lowest-class media stream is fully compatible with AVC. That is, only the NAL is required to be modified, and then the traditional AVC terminal may decode the media stream.

It should be noted that in the above step S304, the media stream, among the received media streams, at the class corresponding to the receiving end may be transmitted to the receiving end through a real-time transport protocol (RTP).

In an embodiment of the present disclosure, in a case of the coding being scaled video coding (SVC), a NAL unit header in each of the received media streams includes a class identifier of each class of the media stream. Therefore, the media streams may be distributed according to the class identifiers. Specifically in an embodiment of the present disclosure, the above step S304 may be expressed as that: the media stream, among the received media streams, at the class corresponding to the receiving end is transmitted to the receiving end according to the corresponding relationship and the class identifier.

In an embodiment of the present disclosure, before the above step S320 is performed, the method may further include: receiving first request information transmitted by the receiving end for requesting adjustment of a class of a media stream, where the first request information carries a class requirement of the receiving end on the class of the media stream; establishing the corresponding relationship; and transmitting to the transmitting end second request information for making a request to adjust the media stream to be in a manner of classification, where the second request information also carries the class requirement of the receiving end on the class of the media stream.

It should be noted that the step of receiving the first request information transmitted by the receiving end for requesting adjustment of the class of the media stream includes one of: directly receiving the first request information transmitted by the receiving end; and receiving, through a web server and an application server, the first request information transmitted by the receiving end.

It should be noted that the receiving end may download the web interface from the web server, and the user may select the class requirement on the web interface to trigger the first request information. The first request information includes the selected class requirement and is reported to the web server, and then obtained through the application server.

In an embodiment of the present disclosure, after the step of transmitting to the transmitting end the second request information for making the request to adjust the media stream to be in the manner of classification, the method may further include one of that: the transmitting end rejects the second request information; and that the transmitting end accepts the second request information.

Through the above negotiation process between the transmitting end and the receiving end, the transmitting end can perform specific classification according to the needs of the receiving ends, and then a certain media stream may be presented at different classes for different receiving ends.

Optionally, the above steps may, but may not necessarily, be executed by the video relay and the like.

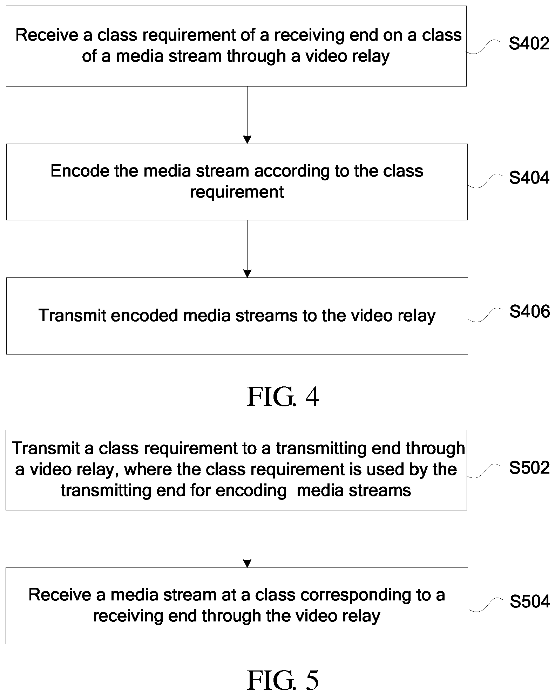

In the embodiment, a media stream transmission method is further provided. FIG. 4 is a flowchart of the media stream transmission method according to the embodiment of the present disclosure. As shown in FIG. 4, the method includes steps described below.

In S402, a class requirement of a receiving end on a class of a media stream is received through a video relay.

In S404, the media stream is encoded according to the class requirement.

In S406, encoded media streams are transmitted to the video relay.

Through the above steps, the media stream is encoded according to the class requirement of the receiving end, and the encoded media streams are transmitted to the video relay, so that the receiving end may obtain the media stream at a class required by the receiving end itself through the video relay. Thus, different video classes presented for different receiving ends may be implemented, and the classes of the video stream viewed by different users may be different. Therefore, the problem, in the related art, of poor user experience due to the totally same class of the video stream viewed by all users in a multi-stream architecture of an IMS can be solved. The user experience is improved.

In an embodiment of the present disclosure, the above step S402 may be expressed as: receiving request information, transmitted by the video relay, for making a request to adjust the media stream to be in a manner of classification. The request information carries a class requirement of the receiving end on a class of the media stream. That is, the class requirement of the receiving end may be received in a manner of being carried in the request information.

Through the above steps, specific classification may be performed according to the needs of the receiving ends, and then a certain media stream may be presented at different classes for different receiving ends.

In an embodiment of the present disclosure, the above step S404 may be expressed as: performing, according to the class requirement, SVC on the media stream. ANAL unit header in each of media streams after the SVC is performed includes a class identifier of each class of the media stream.

It should be noted that after the above step S402 is performed, the method may further include: rejecting the request information; and accepting the request information.

It should be noted that in the case of accepting the request information, the above step S404 may be performed, and in the case of rejecting the request information, the step S404 may not be performed, but is not limited thereto.

It should be noted that the above step S406 may be expressed as that: encoded media streams are transmitted to the video relay through the RTP, but is not limited thereto.

It should be noted that the method in the embodiment shown in FIG. 4 may be executed by a transmitting end, such as the A-type terminal described in FIG. 1 or FIG. 2 above, but is not limited thereto.

In the embodiment, a media stream reception method is further provided. FIG. 5 is a flowchart of the media stream reception method according to the embodiment of the present disclosure. As shown in FIG. 5, the method includes steps described below.

In S502, a class requirement is transmitted to a transmitting end through a video relay. The class requirement is used by the transmitting end for encoding a media stream.

In S504, a media stream at a class corresponding to a receiving end is received through the video relay.

Through the above steps, the class requirement is transmitted to the transmitting end, where the class requirement is used by the transmitting end for encoding the media stream, so that the transmitting end may encode the media stream according to the class requirement of the receiving end and transmits encoded media streams to the video stream and then the receiving end may obtain the media stream at a class required by the receiving end itself through the video relay. Thus, different video classes presented for different receiving ends may be implemented, and the classes of the video stream viewed by different users may be different. Therefore, the problem, in the related art, of poor user experience due to the totally same class of the video stream viewed by all users in a multi-stream architecture of an IMS can be solved. The user experience is improved.

It should be noted that the above step S502 may be expressed as that: request information for making a request to adjust the media stream to be in a manner of classification is transmitted to the transmitting end through the video relay. The request information carries the class requirement.

It should be noted that the above coding may be scaled video coding (SVC), but is not limited thereto.

In an embodiment of the present disclosure, before the step S502 is performed, the method may further include: requesting a web interface from a web server. The web interface is configured to submit class requirement selected by a user to the web server.

It should be noted that the method in the embodiment shown in FIG. 5 may be executed by a receiving end, such as the B-type terminal described in FIG. 1 or FIG. 2 above, but is not limited thereto.

It should be noted that the method shown in FIG. 4 and the method shown in FIG. 5 are actually the flows of negotiation between the transmitting end and the receiving end about media stream classification.

To better understand the present disclosure, the present disclosure will be further described below in conjunction with preferred embodiments.

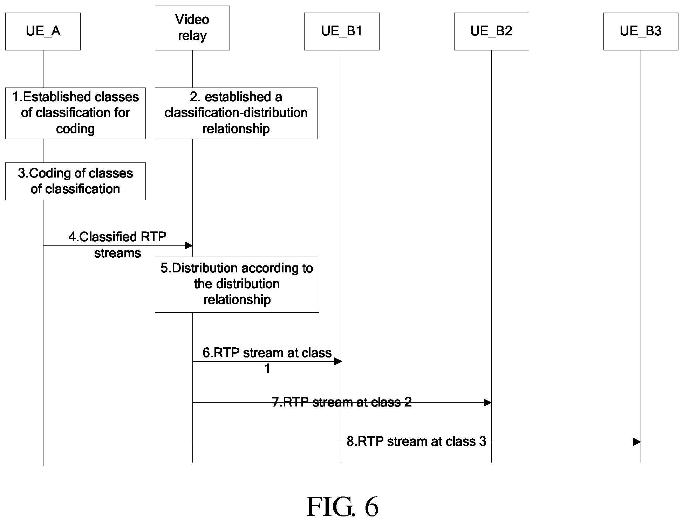

A preferred embodiment of the present disclosure provides a media stream transmission method. FIG. 6 is a flowchart 1 illustrating a relay processing process of media stream classification according to the preferred embodiment of the present disclosure. As shown in FIG. 6, the method includes steps described below.
1. A UE_A (corresponding to the transmitting end described above) is a video source, and is a user equipment (UE) that supports transmission of the media stream in a manner of classification. Through other operations (described in other embodiments below), the UE_A previously establishes classes for coding needed by the video stream, specifically several classes based on which coding is performed, and the video class definition (such as resolution, code rate, frame rate, video quality, etc.) of each class.
2. The video relay is a relay server that supports media stream classification. Through other operations (described in other embodiments below), the video relay previously establishes a classification-distribution relationship of the video streams, and specifically in the relationship the receiving end (UE) to which a classified video stream (such as a classified video stream transmitted from the UE_A) at a certain class is forwarded is determined.
3. The UE_A performs coding according to a specific classification requirement.
4. The UE_A transmits classified video streams to the video relay through the RTP.
5. The video relay makes copies (for example when an RTP stream at a certain class is required by multiple receiving ends) and distribution according to the distribution relationship of the video stream of the UE_A. When multiple video sources exist, the video relay needs to establish a distribution relationship (equivalent to the above corresponding relationship) for each video source. If a classified video stream (such as the video stream of the UE_A) among these video sources exists, the corresponding distribution relationship needs to be a classification-distribution relationship.
6. If a UE_B1 requires an RTP stream at class 1 in the distribution relationship, the video relay transmits the video stream at class 1 among the video streams accepted from the UE_A to the UE_B1 (equivalent to one of the above first terminals).
7. If a UE_B2 requires an RTP stream at class 2 in the distribution relationship, the video relay transmits the video stream at class 2 among the video streams accepted from the UE_A to the UE_B2 (equivalent to one of the above first terminals).
8. If a UE_B13 requires an RTP stream at class 3 in the distribution relationship, the video relay transmits the video stream at class 3 among the video streams accepted from the UE_A to the UE_B3 (equivalent to one of the above first terminals).

Remarks: Steps 1 and 2 are preconditions and may be interchanged in timing. The subsequent steps do not depend on the timing of steps 1 and 2, but depend on the fact that steps 1 and 2 have occurred.

Remarks: If the classified video is encoded in the inter-class-dependent manner, for example, class 1 is the lowest class and class 2 is a higher class (based on class 1 and supplemented by class 2), the complete class 2 video stream includes a class 1 video stream and a class 2 video stream; and similarly the complete class 3 video stream includes the class 1 video stream, the class 2 video stream and a class 3 video stream. Therefore, the classified video stream transferred to the UE_B2 should include the class 1 video stream, the class 2 video stream.

Remarks: When the UE_A performs coding, the classification relationship of the classified video and the video content (NAL data) in the classification are independent of the sequence number of the RTP, so the video relay does not need to modify the data in the RTP packet and forwards it directly. The UE_B (including the UE_B1, the UE_B2 and the UE_B3) performs coding not by depending on the sequence number of the RTP, but according to the video content (NAL data) in the classification.

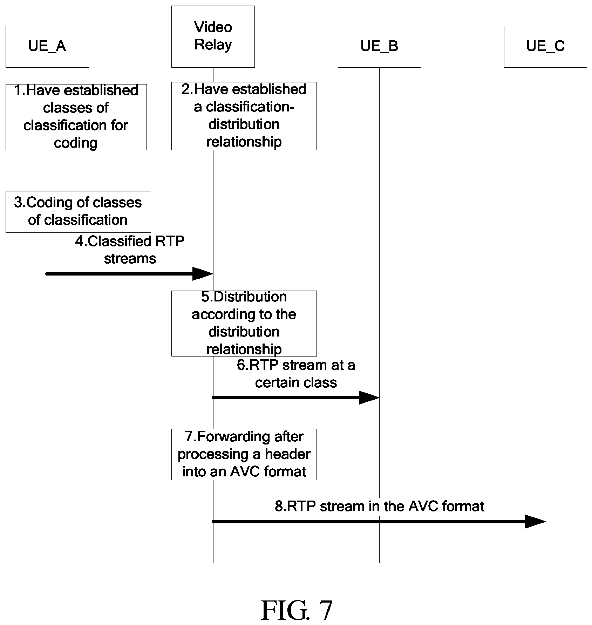

FIG. 7 is a flowchart 2 illustrating a relay processing process of media stream classification according to a preferred embodiment of the present disclosure. The process is compatible with AVC- type terminal and includes steps described below.
1. The UE_A is a video source, and is a UE that supports transmission of the media stream in a manner of classification. Through other operations (described in other embodiments below), the UE_A previously establishes classes for coding needed by the video stream, specifically several classes based on which coding is performed, and the video class definition (such as resolution, code rate, frame rate, video quality, etc.) of each class.
2. The video relay is a relay server that supports media stream classification. Through other operations (described in other embodiments below), the video relay previously establishes a classification-distribution relationship of the video streams, and specifically in the relationship the receiving end (UE) to which a classified video stream (such as a classified video stream transmitted from the UE_A) at a certain class is forwarded is determined.
3. The UE_A performs coding according to a specific classification requirement.
4. The UE_A transmits classified video streams to the video relay through the RTP.
5. The video relay performs distribution according to the distribution relationship of the video stream of the UE_A. When multiple video sources exist, the video relay needs to establish a distribution relationship for each video source. If a classified video stream (such as the video stream of the UE_A) among these video sources exists, the corresponding distribution relationship needs to be a classification-distribution relationship.
6. The video relay copies an RTP at a certain class and distributes the copied RTP at the certain class to the UE_B according to the distribution relationship.
7. The video relay needs to copy and distribute the stream to a traditional AVC terminal (such as the UE_C) according to the distribution relationship. The video relay needs to pre-process the RTP stream at the lowest-class (class 1). The specific processing is to modify the network abstraction layer (NAL) unit header of a classified video stream to the NAL unit header in the AVC format.
8. The video relay transmits the RTP stream to the UE_C according to the AVC format.

Remarks: The video coding layer (VCL) at the lowest class (class 1) of the classified video stream is fully compatible with the AVC. Therefore, only the NAL needs to be modified, and the traditional AVC terminal can decode the RTP stream.

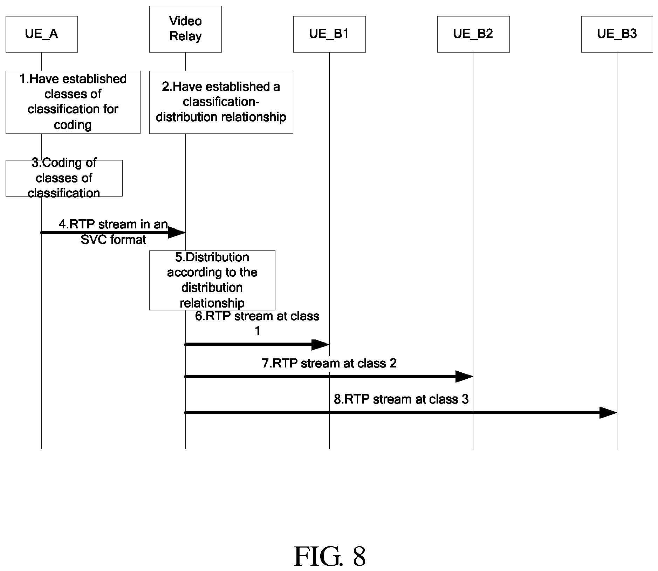

FIG. 8 is a flowchart 1 illustrating a relay processing process of media stream classification based on a scaled video coding (SVC) technology according to a preferred embodiment of the present disclosure. Typical classified video coding is the SVC technology defined by a series of numbered Request For Comments (RFC) 6190. The process includes steps described below.
1. The UE_A is a video source, and is a UE that supports transmission of the media stream in a manner of classification. Through other operations (described in other embodiments below), the UE_A previously establishes classes for coding needed by the video stream, specifically several classes based on which coding is performed, and the video class definition (such as resolution, code rate, frame rate, video quality, etc.) of each class.
2. The video relay is a relay server that supports media stream classification. Through other operations (described in other embodiments below), the video relay previously establishes a classification-distribution relationship of the video streams, and specifically in the relationship the receiving end (UE) to which a classified video stream (such as a classified video stream transmitted from the UE_A) at a certain class is forwarded is determined.
3. The UE_A performs coding according to a specific classification requirement of SVC.
4. The UE_A transmits classified video streams based on SVC to the video relay through the RTP.
5. The video relay makes copies (for example when an RTP stream at a certain class is required by multiple receiving ends) and distribution according to the distribution relationship of the video stream of the UE_A. When multiple video sources exist, the video relay needs to establish a distribution relationship for each video source. If a classified video stream (such as the video stream of the UE_A) among these video sources exists, the corresponding distribution relationship needs to be a classification-distribution relationship. For SVC coding, an identifier for video classification is extended in the NAL header, and the video relay may determine distribution according to the identifier.
6. If a UE_B1 requires an RTP stream at class 1 in the distribution relationship, the video relay transmits the video stream at class 1 among the video streams accepted from the UE_A to the UE_B1.
7. If a UE B2 requires an RTP stream at class 2 in the distribution relationship, the video relay transmits the video stream at class 2 among the video streams accepted from the UE_A to the UE_B2.
8. If a UE B3 requires an RTP stream at class 3 in the distribution relationship, the video relay transmits the video stream at class 3 among the video streams accepted from the UE_A to the UE_B3.

Remarks: The SVC technology only defines the classification of coding, that is, versions of the source video at multiple classes may be obtained by performing coding once. In subsequent use, if versions at different classes are required, no transcoding is required. However, SVC does not define a distribution mechanism of the video relay, does not define how to perform video class negotiation between the receiving end and the video source in a complex distribution environment, and does not define how to perform accurate classification forwarding by the video relay based on the negotiation result. This is the largest distinguishing feature of the present disclosure from the SVC technology.

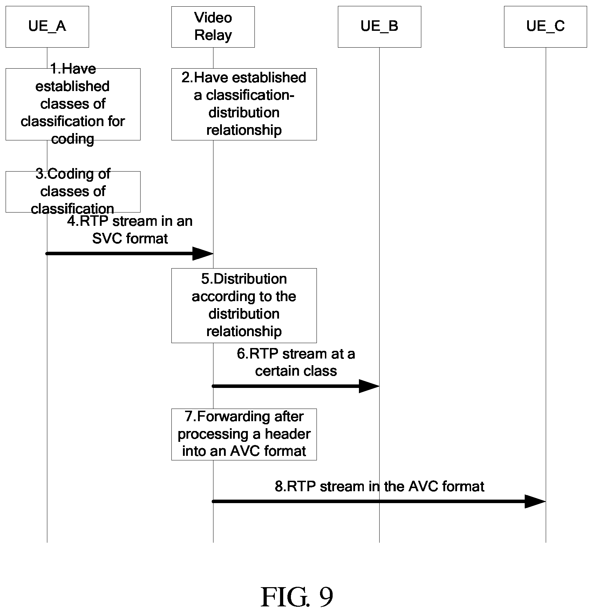

FIG. 9 is a flowchart 2 illustrating a relay processing process of media stream classification based on a SVC technology according to a preferred embodiment of the present disclosure. The process is compatible with the AVC- type terminal and includes steps described below.
1. The UE_A is a video source, and is a UE that supports transmission of the media stream in a manner of classification. Through other operations (described in other embodiments below), the UE_A previously establishes classes for coding needed by the video stream, specifically several classes based on which coding is performed, and the video class definition (such as resolution, code rate, frame rate, video quality, etc.) of each class.
2. The video relay is a relay server that supports media stream classification. Through other operations (described in other embodiments below), the video relay previously establishes a classification-distribution relationship of the video streams, and specifically in the relationship the receiving end (UE) to which a classified video stream (such as a classified video stream transmitted from the UE_A) at a certain class is forwarded is determined.
3. The UE_A performs coding according to a specific classification requirement of SVC.
4. The UE_A transmits classified video streams based on SVC to the video relay through the RTP.
5. The video relay performs distribution according to the distribution relationship of the video stream of the UE_A. When multiple video sources exist, the video relay needs to establish a distribution relationship for each video source. If a classified video stream (such as the video stream of the UE_A) among these video sources exists, the corresponding distribution relationship needs to be a classification-distribution relationship.
6. The video relay copies an RTP at a certain class and distributes the copied RTP at the certain class to the UE_B according to the distribution relationship.
7. The video relay needs to copy and distribute the stream to a traditional AVC terminal (such as the UE_C) according to the distribution relationship. The video relay needs to pre-process the RTP stream at the lowest-class (class 1). The specific processing is to modify the network abstraction layer (NAL) unit header of a classified video stream to the NAL unit header in the AVC format, and the video relay transmits the RTP stream to the UE_C according to the AVC format.
8. The video relay transmits the RTP stream to the UE_C according to the AVC format.

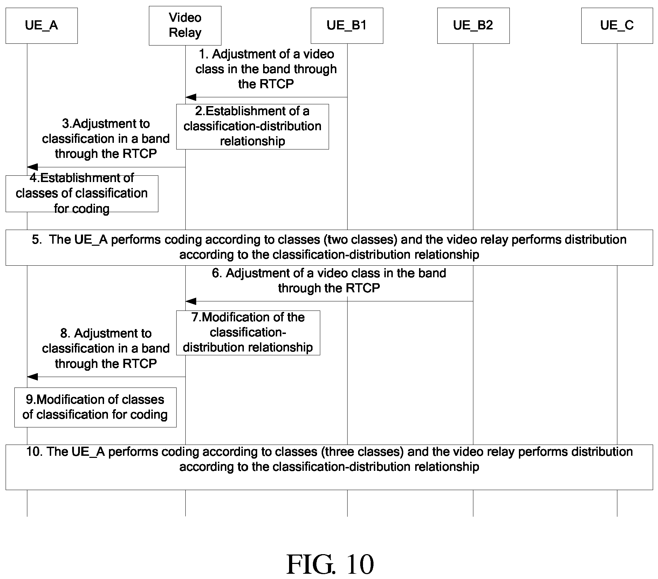

FIG. 10 is a flowchart 1 illustrating a negotiation process of media stream classification according to a preferred embodiment of the present disclosure. The process includes steps described below.

The current video source (UE_A) transmits a video at a fixed class, such as AVC. At this time, the UE_B1 requires for a different class of the video, and transmits a request for adjustment of a video class in the band through an RTP control protocol (RTCP).
2. Since a different class of the video is required by a receiving end, the video relay needs to establish a classification-distribution relationship.
3. The video relay transmits the request for adjustment of the class of the video in the band through the RTCP protocol.
4. The UE_A establishes classes for classification coding according to the request.
5. Currently two classes exist. Coding is performed by the UE_A according to the two classes and is forwarded by the video relay.
6. At this time, the UE_B2 also proposes a requirement on the class, and transmits a request for adjustment of a class of the video in the band through the RTCP protocol;
7. The video relay modifies the classification-distribution relationship according to the received request.
8. The video relay transmits to the video source (UE_A) the requests for adjustment of the class of the video in the band through the RTCP protocol.
9. The UE_A modifies the classes for classification coding according to the request.
10. Currently three classes exist. Coding is performed by the UE_A according to the three classes and is forwarded by the video relay.

Remarks: In the step 6, if the video class required by the UE_B2 is not the third class, but the same class as required by the UE_B1, the video relay only needs to modify the classification forwarding relationship and forward the video at the second class to the UE_B2. The requirement on the third class does not need to be transmitted to the UE_A.

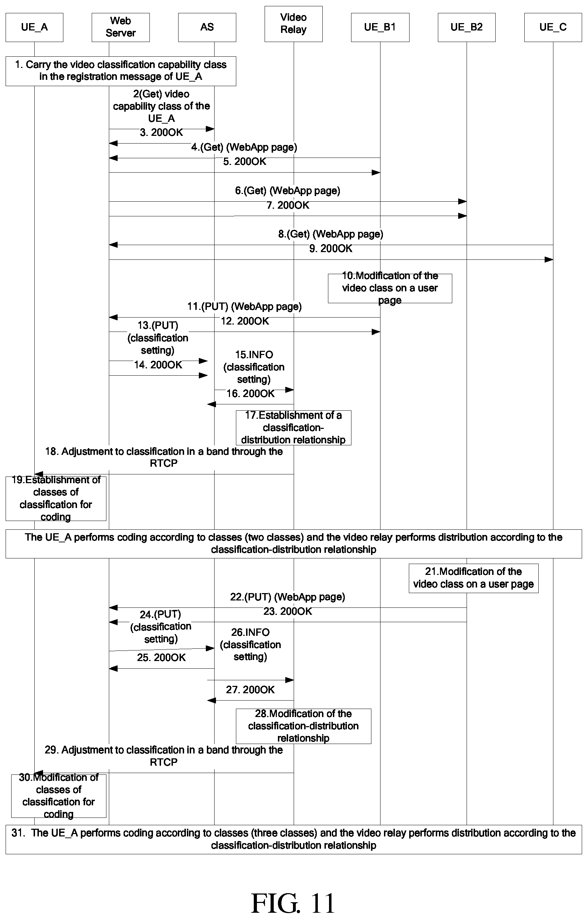

FIG. 11 is a flowchart illustrating a negotiation process of web-controlled media stream classification according to a preferred embodiment of the present disclosure.

If the terminal is in a web-based form, a more convenient negotiation process of media stream classification may be proposed.

The process includes steps described below.

When the UE_A is registered, the video classification capability class, i.e., several classes based on which the UE_A may perform video classification coding, and the video class definition (such as resolution, code rate, frame rate, video quality, etc.) of each class are carried in the registration message. Such information is recorded by the application server (AS).
2. The web server queries from the AS about the video capability class of the UE_A through an open capability interface of the AS, specifically through a Get request of the hypertext transfer protocol (HTTP). The Get request is a request directly transmitted through a link uniform resource locator (URL).
3. The AS returns a result, which may specifically through a 200OK response of the HTTP protocol.
4. The UE_B1 accesses the entire multi-stream service scenario (such as a video conference) and uses the web-based interface. Then the UE_B1 may request a page of the web application (WebApp) from the web server, which may specifically through the Get request of the HTTP protocol.
5. The web server returns the page, which may specifically through the 200 OK response of the HTTP protocol. On the web page, a video (<video>) tag corresponding to the video stream of the UE_A exists. On such video interface, the capability class (e.g., standard definition, high definition, superdefinition, etc.) of this video may be suspended.
6. The UE_B2 is the same as the UE_B1 in the manner of requesting for a page.
7. The page is returned, and interaction is the same as the interaction of the UE_B1.
8. The UE_C is the same as the UE_B1 in the manner of requesting for a page.
9. The page is returned, and interaction is the same as the interaction of the UE_B1. The UE_C has an AVC terminal capability, and such capability class of the video is not presented on the video interface.
10. A user of the UE_B1 modifies the video class (for example, from standard definition to high definition) through an operation on the web interface.
11. The UE_B1 submits a modification request to the web server, which may specifically through a PUT request of the HTTP protocol.
12. The web server returns a response, which may specifically be 200OK.
13. The web server requests setting of video classification of a certain accepting end (UE_B1) from the AS through the open capability interface of the AS, which may specifically through the PUT request of the HTTP protocol.
14. The AS returns a response, which may specifically be 200OK.
15. The AS controls the video relay to modify the classification setting (to create classification setting if the video stream is not classified before) and the distribution relationship through the media control interface, which may specifically through an information (INFO) message carrying an extensible markup language (XML) control structure.
16. The video relay returns 200OK.
17. Since the video stream is not classified before, the video relay creates a classification-distribution relationship.
18. The video relay transmits a request for classification in the band through the RTCP protocol.
19. The UE_A establishes classes for classification coding according to the request.
20. Currently two classes exist. Coding is performed by the UE_A according to the two classes and is forwarded by the video relay.
21. A user of the UE_B2 modifies the video class (for example, from standard definition to high definition) through an operation on the web interface.
22. The UE_B2 submits a modification request to the web server, which may specifically through a PUT request of the HTTP protocol.
23. The web server returns a response, which may specifically be 200OK.
24. The web server requests setting of video classification of a certain accepting end (UE_B2) from the AS through the open capability interface of the AS, which may specifically through the PUT request of the HTTP protocol.
25. The AS returns a response, which may specifically be 200OK.
26. The AS controls the video relay to modify the classification setting and the distribution relationship through the media control interface, which may specifically through the information (INFO) message carrying the extensible markup language (XML) control structure.
27. The video relay returns 200OK.
28. The video relay modifies the classification-distribution relationship.
29. The video relay transmits a request for classification in the band through the RTCP protocol.
30. The UE_A modifies the classes for classification coding according to the request.
31. Currently three classes exist. Coding is performed by the UE_A according to the three classes and is forwarded by the video relay.

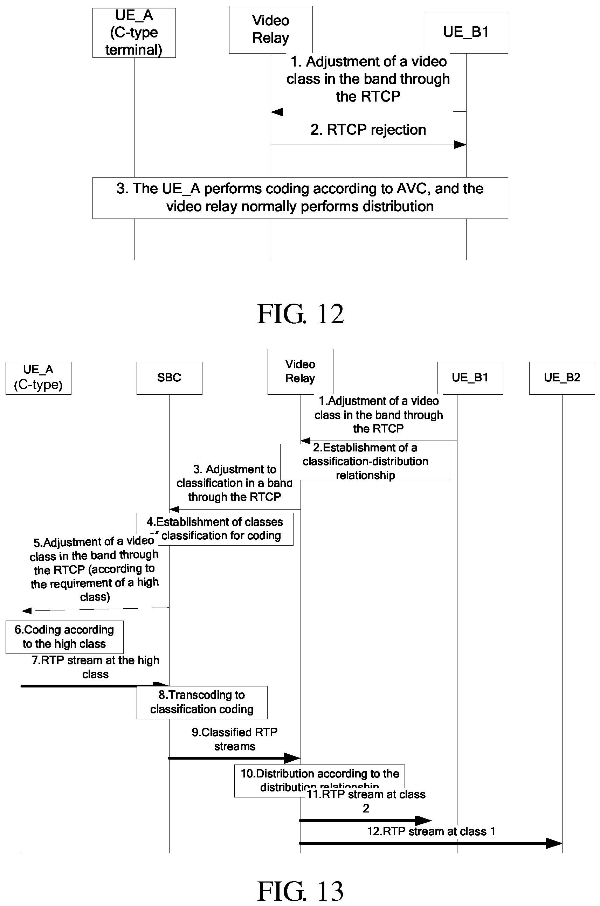

FIG. 12 is a flowchart illustrating a process in which a video source does not support media stream classification according to a preferred embodiment of the present disclosure. The video source UE_A is a C-type terminal and a terminal that does not support classification. The process includes steps described below.
1. The UE_B1 transmits a request for classification in the band through the RTCP protocol.
2. Since the UE_A does not support classification of the video, the video relay rejects the request.
3. The UE_A continues to perform coding according to AVC, and the video relay continues to make copies and distribution according to the AVC.

Remarks: The manner in which the video relay obtains information that the UE_A does not support classification of the video may be indicated through rejection of/no response to the classification request forwarded and transmitted to the UE_A, or indicated through the AS.

FIG. 13 is a flowchart illustrating a process in which a session border controller (SBC) performs media stream classification and transcoding according to a preferred embodiment of the present disclosure. As shown in FIG. 13, the process includes steps described below.
1. The UE_B1 transmits a request for classification in the band through the RTCP protocol.
2. The video relay creates a classification-distribution relationship.
3. The video relay transmits the request for classification to the UE_A side through the RTCP protocol, and transmits the request for classification to the session border controller (SBC) first.
4. The SBC establishes classes for classification coding according to the request.
5. The SBC transmits a request (a request for compatibility with AVC) for adjustment of a video class in the band through an RTCP protocol, and the highest class in the classification is accorded with.
6. The UE_A performs coding according to the requirement of the new class.
7. The UE_A transmits an RTP stream at the new class.
8. The SBC transcodes a high-class AVC stream into a stream in the manner of classification, such as SVC.
9. The SBC transmits classified streams to the video relay.
10. The video relay performs distribution according to the classification-distribution relationship.
11. A stream at class 2 is transmitted to the UE_B1.
12. A stream at class 1 is transmitted to the UE_B2.

It should be noted that the UE_A or the video source may be regarded as the transmitting end, and the UE_B and/or the UE_C may be regarded as the receiving end.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solutions provided in the present disclosure substantially, or the part contributing to the related art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device or the like) to execute the methods according to embodiments of the present disclosure.

### Embodiment 2

In the embodiment, a media stream transmission apparatus is further provided. The apparatus is configured for implementing the above-mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

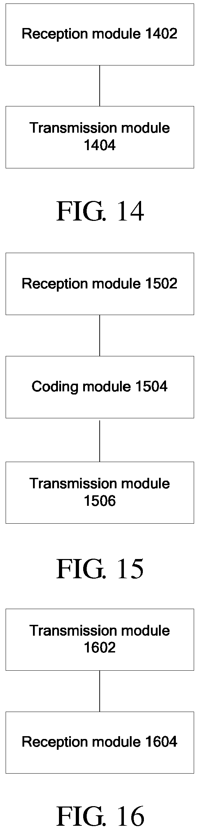

FIG. 14 is a structural block diagram 1 of a media stream transmission apparatus according to the embodiment of the present disclosure. As shown in FIG. 14, the apparatus includes a reception module 1402 and a transmission module 1404.

The reception module 1402 is configured to receive media streams transmitted by a transmitting end. The media streams are media streams encoded by the transmitting end according to a class requirement received by the transmitting end.

The transmission module 1404 is connected to the reception module 1402 and is configured to transmit, according to a pre-established corresponding relationship between a class of a media stream and a receiving end, to the receiving end a media stream, among the received media streams, at a class corresponding to the receiving end.

Through the above apparatus, the media stream is encoded according to the class requirement of the receiving end, so that the media stream, among the received streams, at the class corresponding to the receiving end may be transmitted by the above apparatus to the receiving end according to the corresponding relationship between the class of the media stream and the receiving end. The classes of the media stream received by different receiving ends may be different, so that the classes of the video stream viewed by different users are different. Therefore, the problem, in the related art, of poor user experience due to the totally same class of the video stream viewed by all users in a multi-stream architecture of an IMS can be solved. The user experience is improved.

It should be noted that the class described above may be the class of the resolution of the media stream or the class of the code rate of the media stream, but is not limited thereto. For example, in the case of the class of the resolution, the class may be divided into high definition, standard definition, smooth, etc., but is not limited thereto.

In an embodiment of the present disclosure, the receiving end described above may include a first terminal that supports receiving and decoding a classified media stream. The transmitting end described above may be a terminal that supports classification coding negotiation, and classification video coding and transmission. It should be noted that generally, the receiving end may not have the capability of the transmitting end, while the transmitting end may have the capability of the receiving end.

It should be noted that the above-mentioned coding of the media stream may be coding in an inter-class-dependent manner, for example class 1 is the lowest class, class 2 is a higher class, and a complete class 2 media stream includes two parts: a class 1 media stream and a class 2 media stream. Therefore, in the case of the class corresponding to the receiving end (the media stream class required by the receiving end is class 2), the transmission module 1304 may transmit a media stream corresponding to class 1 and a media stream corresponding to class 2 (i.e., the complete class 2 media stream) to the receiving end. However, the present disclosure is not limited to the above coding manner. For example, SVC coding may also be used.

In an embodiment of the present disclosure, in a case of the receiving end including a plurality of the first terminals, the transmission module 1404 may further include: a copy unit, which is configured to make, according to the corresponding relationship, multiple copies of a media stream, among the received media streams, at a same class corresponding to a plurality of the first terminals; and a transmission unit, which is connected to the copy unit and is configured to respectively transmit each of the multiple copies of the media stream at the same class and a respective media stream at another class corresponding to each of the plurality of the first terminals to the each of the plurality of the first terminals.

An example is given. For example, two first terminal described above are included, namely, a terminal 1 and a terminal 2, the class requirement of the terminal 1 on the media stream class is class 2, and the class requirement of the terminal 2 on the media stream class is class 3. Then based on the above-mentioned coding in the inter-class-dependent manner, the classes corresponding to the terminal 1 are class 1 and class 2, the classes corresponding to the terminal 2 are class 1, class 2, and class 3, and the same classes corresponding to both the terminal 1 and the terminal 2 are class 1 and class 2. Then, the media stream corresponding to class 1 and the media stream corresponding to class 2 are respectively made into two copies. One copied media stream corresponding to class 1 and one copied media stream corresponding to class 2 are transmitted to the terminal 1. The other copied media stream corresponding to class 1, the other copied media stream corresponding to class 2, and a media stream corresponding to class 3 are transmitted to the terminal 2 together.

In an embodiment of the present disclosure, in a case of the receiving end further including an advanced video coding (AVC) terminal, the copy unit is further configured to copy the received media streams; the transmission module 1404 further includes a modification unit, which is connected to the copy unit and is configured to modify a network abstraction layer (NAL) unit header in a lowest-class media stream among the received media streams to a NAL unit header in an AVC format; and the transmission unit may further be configured to transmit, according to the AVC format, the modified lowest-class media stream to the AVC terminal.

It should be noted that a data block part in the lowest-class media stream among the received media streams may be unchanged, and only the NAL unit header is modified, so that the lowest-class media stream is fully compatible with AVC. That is, only the NAL is required to be modified, and then the traditional AVC terminal may decode the media stream.

It should be noted that the transmission module 1404 may transmit to the receiving end the media stream, among the received media streams, at the class corresponding to the receiving end through a real-time transport protocol (RTP).

In an embodiment of the present disclosure, in a case of the coding being scaled video coding (SVC), a NAL unit header in each of the received media streams includes a class identifier of each class of the media stream. Therefore, the media streams may be distributed according to the class identifiers. Specifically in an embodiment of the present disclosure, the transmission module 1404 may further be configured to transmit to the receiving end the media stream, among the received media streams, at the class corresponding to the receiving end according to the corresponding relationship and the class identifier.

In an embodiment of the present disclosure, the reception module 1402 may further be configured to receive first request information transmitted by the receiving end for requesting adjustment of a class of the media stream. The first request information carries a class requirement of the receiving end on the class of the media stream. The apparatus further includes: an establishment module, which is connected to the reception module 1402 and is configured to establish the corresponding relationship. The transmission module 1404 may further be configured to transmit to the transmitting end second request information for making a request to adjust the media stream to be in a manner of classification. The second request information also carries the class requirement of the receiving end on the class of the media stream.

It should be noted that the reception module 1404 may further be configured to perform one of following operations: directly receiving the first request information transmitted by the receiving end; and receiving, through a web server and an application server, the first request information transmitted by the receiving end.

It should be noted that the receiving end may download the web interface from the web server, and the user may select the class requirement on the web interface to trigger the first request information. The first request information includes the selected class requirement and is reported to the web server, and then obtained through the application server.

The above negotiation process between the transmitting end and the receiving end is implemented through the reception module 1402 and the transmission module 1404. Thus, the transmitting end can perform specific classification according to the needs of the receiving ends, and then a certain media stream may be presented at different classes for different receiving ends.

In the embodiment of the present disclosure, a video relay is further provided and includes the media stream transmission apparatus described in the above embodiment.

It should be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 3

In the embodiment, a media stream transmission apparatus is provided. FIG. 15 is a structural block diagram 2 of the media stream transmission apparatus according to the embodiment of the present disclosure. As shown in FIG. 15, the apparatus includes a reception module 1502, a coding module 1504 and a transmission module 1506.

The reception module 1502 is configured to receive a class requirement of a receiving end on a class of a media stream through a video relay.

The coding module 1504 is connected to the reception module 1502 and is configured to encode the media stream according to the class requirement.

The transmission module 1506 is connected to the coding module 1504 and is configured to transmit encoded media streams to the video relay.

Through the above apparatus, the media stream is encoded according to the class requirement of the receiving end, and the encoded media streams are transmitted to the video relay, so that the receiving end may obtain the media stream at a class required by the receiving end itself through the video relay. Thus, different video classes presented for different receiving ends may be implemented, and the classes of the video stream viewed by different users may be different. Therefore, the problem, in the related art, of poor user experience due to the totally same class of the video stream viewed by all users in a multi-stream architecture of an IMS can be solved. The user experience is improved.

In an embodiment of the present disclosure, the reception module 1502 is further configured to receive request information, transmitted by the video relay, for making a request to adjust the media stream to be in a manner of classification. The request information carries a class requirement of the receiving end on a class of the media stream. That is, the class requirement of the receiving end may be received in a manner of being carried in the request information. Through the above apparatus, specific classification may be performed according to the needs of the receiving ends, and then a certain media stream may be presented at different classes for different receiving ends.

In an embodiment of the present disclosure, the coding module 1504 may further be configured to perform, according to the class requirement, SVC on the media stream. A NAL unit header in each of media streams after the SVC is performed includes a class identifier of each class of the media stream.

It should be noted that the above apparatus further includes: a processing module, which is connected to the reception module 1502 and is configured to reject or accept the request information.

It should be noted that the transmission module 1506 may transmit encoded media streams to the video relay through the RTP, but is not limited thereto.

It should be noted that the above apparatus may be located at the transmitting end, such as in the A-type terminal shown in FIG. 1 or FIG. 2, but is not limited thereto.

It should be noted that the various modules described above may be implemented by software or hardware. Implementation by hardware may, but may not necessarily, be performed in the following manners: the various modules described above are located in a same processor, or the various modules described above are located in their respective processors in any combination form.

In the embodiment, a media stream reception apparatus is provided. FIG. 16 is a structural block diagram of the media stream reception apparatus according to the embodiment of the present disclosure. As shown in FIG. 16, the apparatus includes a transmission module 1602 and a reception module 1604.

The transmission module 1602 is configured to transmit a class requirement to a transmitting end through a video relay. The class requirement is used by the transmitting end for encoding a media stream.

The reception module 1604 is connected to the transmission module 1602 and is configured to receive a media stream at a class corresponding to a receiving end through the video relay.

Through the above apparatus, the class requirement is transmitted to the transmitting end, where the class requirement is used by the transmitting end for encoding the media stream, so that the transmitting end may encode the media stream according to the class requirement of the receiving end and transmits encoded media streams to the video stream and then the receiving end may obtain the media stream at a class required by the receiving end itself through the video relay. Thus, different video classes presented for different receiving ends may be implemented, and the classes of the video stream viewed by different users may be different. Therefore, the problem, in the related art, of poor user experience due to the totally same class of the video stream viewed by all users in a multi-stream architecture of an IMS can be solved. The user experience is improved.

It should be noted that the transmission module 1602 may further be configured to transmit request information for making a request to adjust the media stream to be in a manner of classification to the transmitting end through the video relay. The request information carries the class requirement.

It should be noted that the above coding may be scaled video coding (SVC), but is not limited thereto.

In an embodiment of the present disclosure, the apparatus may further include: a request module, which is connected to the transmission module 1602 and is configured to request a web interface from a web server. The web interface is configured to submit class requirement selected by a user to the web server.

It should be noted that the above apparatus may be located at the receiving end, such as in the B-type terminal shown in FIG. 1 or FIG. 2, but is not limited thereto.

It should be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 4

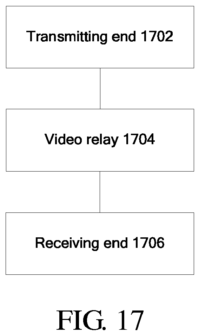

The embodiment of the present disclosure further provides a media stream transmission system. FIG. 17 is a structural block diagram of the media stream transmission system according to the embodiment of the present disclosure. As shown in FIG. 17, the system includes: a transmitting end 1702, a video relay 1704, and a receiving end 1706.

The transmitting end 1702 encodes a media stream according to a class requirement received by the transmitting end 1702, and transmits encoded media streams to the video relay. The video relay 1704 receives the encoded media streams, and transmits to the receiving end a media stream, among the received and encoded media streams, at a class corresponding to the receiving end 1706 according to a pre-established corresponding relationship between a class of the media stream and the receiving end 1706.

Through the above system, the media stream is encoded according to the class requirement of the receiving end, so that the media stream, among the received streams, at the class corresponding to the receiving end may be transmitted by the above system to the receiving end according to the corresponding relationship between the class of the media stream and the receiving end. The classes of the media stream received by different receiving ends may be different, so that the classes of the video stream viewed by different users are different. Therefore, the problem, in the related art, of poor user experience due to the totally same class of the video stream viewed by all users in a multi-stream architecture of an IMS can be solved. The user experience is improved.

It should be noted that the class described above may be the class of the resolution of the media stream or the class of the code rate of the media stream, but is not limited thereto. For example, in the case of the class of the resolution, the class may be divided into high definition, standard definition, smooth, etc., but is not limited thereto.

In an embodiment of the present disclosure, the receiving end 1706 may include a first terminal that supports receiving and decoding a classified media stream. The transmitting end 1702 may be a terminal that supports classification coding negotiation, and classification video coding and transmission. It should be noted that generally, the receiving end 1706 may not have the capability of the transmitting end 1702, while the transmitting end 1702 may have the capability of the receiving end 1706.

It should be noted that the above-mentioned coding of the media stream may be coding in an inter-class-dependent manner, for example class 1 is the lowest class, class 2 is a higher class, and a complete class 2 media stream includes two parts: a class 1 media stream and a class 2 media stream. Therefore, in the case of the class corresponding to the receiving end (the media stream class required by the receiving end is class 2), the video relay 1504 may transmit a media stream corresponding to class 1 and a media stream corresponding to class 2 (i.e., the complete class 2 media stream) to the receiving end 1506. However, the present disclosure is not limited to the above coding manner. For example, SVC coding may also be used.

In an embodiment of the present disclosure, the receiving end 1706 includes a first terminal that supports receiving and decoding a classified media stream.

In an embodiment of the present disclosure, the video relay 1704 may further be configured to make, according to the corresponding relationship, multiple copies of a media stream, among the received media streams, at a same class corresponding to a plurality of the first terminals, and respectively transmit each of the multiple copies of the media stream at the same class and a respective media stream at another class corresponding to each of the plurality of the first terminals to the each of the plurality of the first terminals.

An example is given. For example, two first terminal described above are included, namely, a terminal 1 and a terminal 2, the class requirement of the terminal 1 on the media stream class is class 2, and the class requirement of the terminal 2 on the media stream class is class 3. Then based on the above-mentioned coding in the inter-class-dependent manner, the classes corresponding to the terminal 1 are class 1 and class 2, the classes corresponding to the terminal 2 are class 1, class 2, and class 3, and the same classes corresponding to both the terminal 1 and the terminal 2 are class 1 and class 2. Then, the video relay is configured to make the media stream corresponding to class 1 and the media stream corresponding to class 2 respectively into two copies. One copied media stream corresponding to class 1 and one copied media stream corresponding to class 2 are transmitted to the terminal 1. The other copied media stream corresponding to class 1, the other copied media stream corresponding to class 2, and a media stream corresponding to class 3 are transmitted to the terminal 2 together.

In an embodiment of the present disclosure, in a case of the receiving end 1706 further including an advanced video coding (AVC) terminal, the video relay 1704 may further be configured to copy the received media streams; modify a network abstraction layer (NAL) unit header in a lowest-class media stream among the received media streams to a NAL unit header in an AVC format; and transmit, according to the AVC format, the modified lowest-class media stream to the AVC terminal.

It should be noted that a data block part in the lowest-class media stream among the received media streams may be unchanged, and only the NAL unit header is modified, so that the lowest-class media stream is fully compatible with AVC. That is, only the NAL is required to be modified, and then the traditional AVC terminal may decode the media stream.

It should be noted that the video relay 1704 may transmit to the receiving end 1706 the media stream, among the received media streams, at the class corresponding to the receiving end 1706 through a real-time transport protocol (RTP).

In an embodiment of the present disclosure, in a case of the coding being scaled video coding (SVC), a NAL unit header in each of the received media streams includes a class identifier of each class of the media stream. Therefore, the media streams may be distributed according to the class identifiers. Specifically in an embodiment of the present disclosure, the video relay 1704 may further be configured to transmit to the receiving end 1706 the media stream, among the received media streams, at the class corresponding to the receiving end 1706 according to the corresponding relationship and the class identifier.

In an embodiment of the present disclosure, the receiving end 1706 may further be configured to: transmit to the video relay first request information for requesting adjustment of a class of the media stream, where the first request information carries a class requirement of the receiving end on the class of the media stream, and the video relay receives the first request information and then establishes the corresponding relationship; and transmit to the transmitting end second request information for making a request to adjust the media stream to be in a manner of classification. The second request information also carries the class requirement of the receiving end on the class of the media stream.

In an embodiment of the present disclosure, the above system may further include: a web server. The web server is configured to provide a web interface to the receiving end 1706, and the web interface is configured to submit class requirement selected by a user to the web server.

It should be noted that the system further includes an application server, which is configured to transmit the class requirement submitted to the web server to the video relay 1704.

In an embodiment of the present disclosure, the transmitting end 1702 may further be configured to perform at least one of following operations: rejecting the second request information; and accepting the second request information.

To better understand the present disclosure, the present disclosure will be further described below in conjunction with preferred embodiments.

FIG. 1 is a structural block diagram illustrating a relay architecture of streaming media classification according to a preferred embodiment of the present disclosure. As shown in FIG. 1, the structure includes a video relay, an A-type terminal, a B-type terminal, a C-type terminal, an in-band control interface A, an in-band control interface B, a video media interface A, a video media interface B, and a video media interface C.

The video relay supports establishment of a classification-distribution relationship within a video stream, and distribution of the received and classified video streams to different receiving ends according to the classification-distribution relationship; and the video relay supports acception of multiple video streams, a part of which are classified video streams and a part of which are non-classified video streams (in the AVC format).

The A-type terminal supports classification coding negotiation, and classification video coding and transmission. Generally an A-type terminal also has the capability of a B-type terminal. The B-type terminal supports classification video acception and decoding. Optionally, adjustment of a video class in the band through RTCP is supported. Generally the B-type terminal also has the capability of the A-type terminal.

A C-type terminal does not support classification video acception and decoding. A typical AVC-format terminal is an example.

Network interfaces are as follows.

The in-band control interface A (between the A-type terminal and the video relay) is used for the video relay to transmit a request to the A-type terminal by using the RTCP protocol, to request that the video source be adjusted to be in a manner of classification and to indicate specific classes of classification.

The in-band control interface A (between the B-type terminal and the video relay) is used for the B-type terminal to transmit a request to the video relay through the RTCP protocol, to request adjustment of a video class. Remarks: This interface is optional.

The video media interface A (between the A-type terminal and the video relay) is used for the A-type terminal to transmit classified RTP streams to the video relay.

The video media interface A (between the A-type terminal and the video relay) is used for the video relay to distribute an RTP stream at a certain class to the B-type terminal.

The video media interface C (between the C-type terminal and the video relay) is used for the video relay to distribute an RTP stream in the AVC format to the C-type terminal.

FIG. 2 is a structural block diagram illustrating a web-controlled relay architecture of media stream classification according to a preferred embodiment of the present disclosure. As shown in FIG. 2 and compared with FIG. 1, the newly added functional entities include the following ones.

The web server provides a web interface (the classification class capability of the video source is included in the interface) to the terminal, and submits the user's selection of the video class to the web server through the user's operation on the page.

The application server (AS) is used when the classification class capability of the video source is obtained upon registration of the A-type terminal, and the web server queries about the classification class capability of the video source through the open capability interface of the AS. At the same time, the classification class setting of a certain video source from the web server is accepted through the open capability interface of the AS, and is performed to the video relay through the media control interface.

The video relay needs to have the ability of the video relay in FIG. 1. In addition, the video relay needs to accept the classification class setting, by the AS, of the certain video source through the media control interface, and triggers transmission of the classified class of a video source set in the band through the RTCP to the A-type terminal.

The A-type terminal is the same as the A-type terminal in FIG. 1.

The B-type terminal supports classification video acception and decoding. At the same time, the web interface is supported.

The C-type terminal is the same as the C-type terminal in FIG. 1.

It should be noted that the video relay in FIG. 1 and/or FIG. 2 is equivalent to the video relay 1704, the A-type terminal is equivalent to the transmitting end 1702 in FIG. 1 and/or FIG. 2, and the B-type terminal and/or the C-type terminal is equivalent to the receiving end 1706 in FIG. 1 and/or FIG. 2.

### Embodiment 5

An embodiment of the present disclosure further provides a storage medium. Optionally, in the embodiment, the storage medium may be configured to store program codes for executing the steps in the method in the embodiment 1.

Optionally, in the embodiment, the storage medium described above may include, but is not limited to, a USB flash disk, a read-only memory (ROM), a random access memory (RAM), a mobile hard disk, a magnetic disk, an optical disk or another medium capable of storing program codes.

Optionally, in the embodiment, a processor executes the steps of the method in the embodiment 1 according to the program codes stored in the storage medium.

Optionally, for specific examples in the embodiment, reference may be made to the examples described in the above embodiments and optional embodiments, and repetition will not be made in the embodiment.

Apparently, it should be understood by those skilled in the art that each of the above-mentioned modules or steps of the present disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

The above are only preferred embodiments of the present disclosure and are not intended to limit the present disclosure. For those skilled in the art, the present disclosure may have various modifications and variations. Any modifications, equivalent substitutions, improvements and the like made within the spirit and principle of the present disclosure should fall within the scope of the present disclosure.

### INDUSTRIAL APPLICABILITY

Through the technical solutions in the embodiments of the present disclosure, the media stream is encoded according to the class requirement of the receiving end, so that the media stream, among the received streams, at the class corresponding to the receiving end may be transmitted to the receiving end according to the corresponding relationship between the class of the media stream and the receiving end. The classes of the media stream received by different receiving ends may be different, so that the classes of the video stream viewed by different users are different. Therefore, the problem, in the related art, of poor user experience due to the totally same class of the video stream viewed by all users in a multi-stream architecture of an IMS can be solved. The user experience is improved.

## Claims

1. A media stream transmission method, comprising:
receiving media streams transmitted from a transmitting end, wherein the media streams are media streams encoded by the transmitting end according to a class requirement received by the transmitting end; and
transmitting, according to a pre-established corresponding relationship between a class of a media stream and a receiving end, to the receiving end a media stream, among the received media streams, at a class corresponding to the receiving end.

2. The method of claim 1, wherein the receiving end comprises: a first terminal that supports receiving and decoding classified media streams.

3. The method of claim 2, wherein in a case of the receiving end comprising a plurality of the first terminals, the transmitting, according to a pre-established corresponding relationship between a class of the media stream and a receiving end, to the receiving end a media stream, among the received media streams, at a class corresponding to the receiving end comprises:
making, according to the corresponding relationship, multiple copies of a media stream, among the received media streams, at a same class corresponding to a plurality of the first terminals, and respectively transmitting each of the multiple copies of the media stream at the same class and a respective media stream at another class corresponding to each of the plurality of the first terminals to the each of the plurality of the first terminals.

4. The method of claim 3, wherein in a case of the receiving end further comprising an advanced video coding terminal, the transmitting, according to a pre-established corresponding relationship between a class of a media stream and a receiving end, to the receiving end a media stream, among the received media streams, at a class corresponding to the receiving end further comprises:
copying the received media streams;
modifying a network abstraction layer header in a lowest-class media stream among the received media streams to a network abstraction layer header in an advanced video coding format; and
transmitting, according to the advanced video coding format, the modified lowest-class media stream to the advanced video coding terminal.

5. The method of claim 2, wherein in a case of the encoding being scaled video coding, a network abstraction layer header in each of the received media streams comprises a class identifier of each class of the media stream.

6. The method of claim 5, wherein the transmitting, according to a pre-established corresponding relationship between a class of a media stream and a receiving end, to the receiving end a media stream, among the received media streams, at a class corresponding to the receiving end comprises:
transmitting, according to the corresponding relationship and the class identifier, to the receiving end the media stream, among the received media streams, at the class corresponding to the receiving end.

7. The method of claim 1, wherein before the receiving media streams transmitted from a transmitting end, the method further comprises:
receiving first request information transmitted from the receiving end for requesting adjustment of a class of a media stream, wherein the first request information carries a class requirement of the receiving end on the class of the media stream;
establishing the corresponding relationship; and
transmitting to the transmitting end second request information for making a request to adjust the media streams to be in a manner of classification, wherein the second request information carries the class requirement of the receiving end on the class of the media stream.

8. The method of claim 7, wherein the receiving first request information comprises one of:
directly receiving the first request information transmitted by the receiving end; and
receiving, through a web server and an application server, the first request information transmitted by the receiving end.

9. The method of claim 7 or 8, wherein after the transmitting to the transmitting end second request information for making a request to adjust the media stream to be in the manner of classification, the method further comprises one of:
rejecting, by the transmitting end, the second request information; and
accepting, by the transmitting end, the second request information.

10. A media stream transmission system, comprising: a transmitting end, a video relay and a receiving end;
wherein the transmitting end is configured to encode media streams according to a class requirement received by the transmitting end, and transmit encoded media streams to the video relay; and
the video relay is configured to receive the encoded media streams, and transmit, according to a pre-established corresponding relationship between a class of the media stream and the receiving end, to the receiving end a media stream, among the received and encoded media streams, at a class corresponding to the receiving end.

11. The system of claim 10, wherein the receiving end comprises: a first terminal that supports receiving and decoding a classified media stream.

12. The system of claim 11, wherein the video relay is further configured to make, according to the corresponding relationship, multiple copies of a media stream, among the received media streams, at a same class corresponding to a plurality of the first terminals, and respectively transmit each of the multiple copies of the media stream at the same class and a respective media stream at another class corresponding to each of the plurality of the first terminals to the each of the plurality of the first terminals.

13. The system of claim 11, wherein in a case of the receiving end further comprising an advanced video coding terminal, the video relay is further configured to copy the received media streams, modify a network abstraction layer header in a lowest-class media stream among the received media streams to a network abstraction layer header in an advanced video coding format, and transmit, according to the advanced video coding format, the modified lowest-class media stream to the advanced video coding terminal.

14. The system of claim 11, wherein in a case of the coding being scaled video coding, a network abstraction layer header in each of the received media streams comprises a class identifier of each class of the media stream.

15. The system of claim 14, wherein the video relay is further configured to transmit, according to the corresponding relationship and the class identifier, to the receiving end the media stream, among the received media streams, at the class corresponding to the receiving end.

16. The system of claim 10, wherein the receiving end is further configured to: transmit to the video relay first request information for requesting adjustment of a class of the media stream, wherein the first request information carries a class requirement of the receiving end on the class of the media stream, and the video relay is further configured to receive the first request information, and establish the corresponding relationship, and transmit to the transmitting end second request information for making a request to adjust the media stream to be in a manner of classification, wherein the second request information also carries the class requirement of the receiving end on the class of the media stream.

17. The system of claim 16, further comprising a web server configured to provide a web interface to the receiving end, wherein the web interface is configured to submit the class requirement selected by a user to the web server.

18. The system of claim 17, further comprising an application server configured to transmit the class requirement submitted to the web server to the video relay.

19. The system of any one of claims 16 to 18, wherein the transmitting end is further configured to perform at least one of following operations:
rejecting the second request information; and
accepting the second request information.

20. A media stream transmission apparatus, comprising:
a reception module, configured to receive media streams transmitted from a transmitting end, wherein the media streams are media streams encoded by the transmitting end according to a class requirement received by the transmitting end; and
a transmission module, configured to transmit, according to a pre-established corresponding relationship between a class of a media stream and a receiving end, to the receiving end a media stream, among the received media streams, at a class corresponding to the receiving end.

21. The apparatus of claim 20, wherein the receiving end comprises: a first terminal that supports receiving and decoding a classified media stream.

22. The apparatus of claim 21, wherein in a case of the receiving end comprising a plurality of the first terminals, the transmission module further comprises:
a copy unit, configured to make, according to the corresponding relationship, multiple copies of a media stream, among the received media streams, at a same class corresponding to a plurality of the first terminals; and
a transmission unit, configured to respectively transmit each of the multiple copies of the media stream at the same class and a respective media stream at another class corresponding to each of the plurality of the first terminals to the each of the plurality of the first terminals.

23. The apparatus of claim 22, wherein in a case of the receiving end further comprising an advanced video coding terminal, the copy unit is further configured to copy the received media streams;
the transmission module further comprises a modification unit configured to modify a network abstraction layer header in a lowest-class media stream among the received media streams to a network abstraction layer header in an advanced video coding format; and
the transmission unit is further configured to transmit, according to the advanced video coding format, the modified lowest-class media stream to the advanced video coding terminal.

24. The apparatus of claim 21, wherein in a case of the coding being scaled video coding, a network abstraction layer header in each of the received media streams comprises a class identifier of each class of the media stream.

25. The apparatus of claim 24, wherein the transmission module is further configured to transmit, according to the corresponding relationship and the class identifier, to the receiving end the media stream, among the received media streams, at the class corresponding to the receiving end.

26. The apparatus of claim 20, wherein the reception module is further configured to receive first request information transmitted from the receiving end for requesting adjustment of a class of the media stream, wherein the first request information carries a class requirement of the receiving end on the class of the media stream;
wherein the apparatus further comprises: an establishment module configured to establish the corresponding relationship; and
wherein the transmission module is further configured to transmit to the transmitting end second request information for making a request to adjust the media stream to be in a manner of classification, wherein the second request information also carries the class requirement of the receiving end on the class of the media stream.

27. The apparatus of claim 26, wherein the reception module is further configured to perform one of following operations:
directly receiving the first request information transmitted by the receiving end; and
receiving, through a web server and an application server, the first request information transmitted by the receiving end.

28. A video relay, comprising the apparatus of any one of claims 20 to 27.

29. A media stream transmission method, comprising:
receiving a class requirement of a receiving end on a class of a media stream through a video relay;
encoding, according to the class requirement, media streams; and
transmitting encoded media streams to the video relay.

30. The method of claim 29, wherein the receiving a class requirement of a receiving end on the class of a media stream through a video relay comprises:
receiving request information, transmitted from the video relay, for making a request to adjust the media streams to be in a manner of classification, wherein the request information carries the class requirement of the receiving end on the class of the media stream.

31. The method of claim 30, wherein after the receiving request information, transmitted from the video relay, for making a request to adjust the media streams to be in a manner of classification, the method further comprises one of:
rejecting the request information; and
accepting the request information.

32. The method of claim 29, wherein the encoding, according to the class requirement, media streams comprises:
performing, according to the class requirement, scaled video coding on the media streams, wherein a network abstraction layer header in each of media streams with the scaled video coding being performed comprises a class identifier of each class of the media stream.

33. A media stream transmission apparatus, comprising:
a reception module, configured to receive a class requirement of a receiving end on a class of a media stream through a video relay;
a coding module, configured to encode, according to the class requirement, media streams; and
a transmission module, configured to transmit encoded media streams to the video relay.

34. The apparatus of claim 33, wherein the reception module is further configured to receive request information, transmitted from the video relay, for making a request to adjust the media stream to be in a manner of classification, wherein the request information carries a class requirement of the receiving end on a class of the media stream.

35. The apparatus of claim 33, wherein the coding module is further configured to perform, according to the class requirement, scaled video coding on the media streams, wherein a network abstraction layer header in each of media streams with the scaled video coding being performed comprises a class identifier of each class of the media stream.

36. A media stream reception method, comprising:
transmitting a class requirement to a transmitting end through a video relay, wherein the class requirement is used by the transmitting end for encoding media streams; and
receiving a media stream at a class corresponding to a receiving end through the video relay.

37. The method of claim 36, wherein the transmitting a class requirement to a transmitting end through a video relay comprises:
transmitting, through the video relay, to the transmitting end request information for making a request to adjust the media streams to be in a manner of classification, wherein the request information carries the class requirement.

38. The method of claim 36, wherein the encoding is scaled video coding.

39. The method of claim 36, wherein before the transmitting a class requirement to a transmitting end through a video relay, the method further comprises:
requesting a web interface from a web server, wherein the web interface is configured to submit the class requirement selected by the user to the web server.

40. A media stream reception apparatus, comprising:
a transmission module, configured to transmit a class requirement to a transmitting end through a video relay, wherein the class requirement is used by the transmitting end for encoding media streams; and
a reception module, configured to receive a media stream at a class corresponding to a receiving end through the video relay.

41. The apparatus of claim 40, wherein the transmission module is further configured to transmit, through the video relay, to the transmitting end request information for making a request to adjust the media streams to be in a manner of classification, wherein the request information carries the class requirement.

42. The apparatus of claim 40, wherein the encoding is scaled video coding.

43. The apparatus of claim 40, further comprising:
a request module, configured to request a web interface from a web server, wherein the web interface is configured to submit class requirement selected by a user to the web server.

44. A storage medium, comprising stored programs which, when executed, perform the method of any one of claims 1 to 9, 29 to 32, and 36 to 39.

45. A processor, which is configured to execute programs which, when executed, perform the method of any one of claims 1 to 9, 29 to 32, and 36 to 39.
